# EUROPÄISCHE PATENTANMELDUNG

(11) **EP 3 757 692 A1**
(43) Veröffentlichungstag der Anmeldung: **30.12.2020**
(21) Anmeldenummer: 19182853.2
(22) Anmeldetag: 27.06.2019
(51) Int. Cl.: G05B 19/042, G05B 19/418

(54) **VERFAHREN ZUM DURCHFÜHREN VON ÄNDERUNGEN AN EINER INDUSTRIELLEN MASCHINE**

(71) Anmelder: Schneider Electric Industries SAS, 92500 Rueil Malmaison (FR)
(72) Erfinder: SCHWARZ, Michael, 74722 Buchen-Hainstadt (DE); BARRAL, Nuno, 63741 Aschaffenburg (DE)
(74) Vertreter: Manitz Finsterwald Patent- und Rechtsanwaltspartnerschaft mbB

(57) **Zusammenfassung**

Die Erfindung betrifft ein Verfahren zum Durchführen von Änderungen an einer industriellen Maschine, wobei die Maschine zumindest eine Steuereinheit (SPS) aufweist, welche mit einem oder mehreren Feldgeräten gekoppelt ist oder koppelbar ist, wobei die Steuereinheit die Ausführung einer Highlevel-Funktion durch ein erstes Feldgerät veranlasst. Die Erfindung zeichnet sich dadurch aus, dass bei oder nach der Änderung der Maschine die Highlevel-Funktion von einem zweiten Feldgerät ausgeführt wird, wobei das zweite Feldgerät ein neues typgleiches oder ein typmäßig anderes Feldgerät ist als das erste Feldgerät, wobei das zweite Feldgerät mittels eines neuen oder anderen Feldbusses mit der Steuereinheit gekoppelt wird, wobei das zweite Feldgerät ausgebildet ist, dieselbe Highlevel-Funktion auszuführen, wie das ursprüngliche Feldgerät, indem das erste Feldgerät und das zweite Feldgerät ausführbaren Code umfassen, welcher die Ausführung derselben Highlevel-Funktion durch das erste Feldgerät und das zweite Feldgerät ermöglicht.

## Beschreibung

Die vorliegende Erfindung betrifft ein Verfahren zum Durchführen von Änderungen an einer industriellen Maschine, wobei die Maschine zumindest eine Steuereinheit (beispielsweise eine speicherprogrammierbare Steuerung - SPS) aufweist, welche mit einem oder mehreren Feldgeräten gekoppelt ist oder koppelbar ist. Die Steuereinheit veranlasst bevorzugt die Ausführung zumindest einer Highlevel-Funktion durch ein erstes Feldgerät.

Industrielle Maschinen dienen beispielsweise zur Bearbeitung oder Sortierung von Werkstücken. Auch die Verarbeitung von Lebensmittelprodukten kann durch industrielle Maschinen vorgenommen werden. In solchen Maschinen arbeiten üblicherweise mehrere Feldgeräte, welche z.B. Aktoren oder Sensoren sein oder ansteuern können, mit einer Steuereinheit zusammen. Die Steuereinheit wertet die Informationen der Sensoren aus und übermittelt entsprechende Steuerbefehle an die Aktoren.

Durch einen Bediener oder Programmierer können in der Steuereinheit Highlevel-Funktionen angesteuert werden, welche die Feldgeräte der industriellen Maschine dazu veranlassen, bestimmte Aktionen auszuführen. Diese Highlevel-Funktionen können beispielsweise in höheren Programmiersprachen wie C, C++, als auch in für SPS üblichen Sprachen wie IEC-61131-3 und dergleichen implementiert sein.

Bei der Durchführung von Veränderungen an der industriellen Maschine kann es nun beispielsweise notwendig werden, ein Feldgerät durch ein neues Feldgerät zu ersetzen. Sofern das neue Feldgerät nicht identisch zu dem früheren Feldgerät ist kann es z.B. erforderlich sein, das Ablaufprogramm und die darin enthaltenen Highlevel-Funktionen manuell anzupassen, insbesondere wenn das neue Feldgerät mit der Steuereinheit über einen anderen Feldbus gekoppelt ist oder die Highlevel-Funktionen verschieden sind.

Es ist daher die der Erfindung zugrunde liegende Aufgabe, ein Verfahren zum Durchführen von Änderungen an einer industriellen Maschine anzugeben, welches den Aufwand beim Durchführen der Änderungen reduziert.

Diese Aufgabe wird erfindungsgemäß durch ein Verfahren gemäß Anspruch 1 gelöst.

Erfindungsgemäß wird bei oder nach der Änderung der Maschine die Highlevel-Funktion von einem zweiten Feldgerät ausgeführt, wobei das zweite Feldgerät ein neues oder, z.B. typmäßig, anderes Feldgerät ist, als das erste Feldgerät, wobei das zweite Feldgerät mittels eines neuen oder anderen Feldbusses mit der Steuereinheit gekoppelt wird, wobei das zweite Feldgerät ausgebildet ist, dieselbe Highlevel-Funktion auszuführen, wie das ursprüngliche/erste Feldgerät, indem das erste Feldgerät und das zweite Feldgerät ausführbaren Code umfassen, welcher die Ausführung derselben Highlevel-Funktion durch das erste Feldgerät und das zweite Feldgerät ermöglicht.

Anders ausgedrückt ist der ausführbare Code (beispielsweise ein Teil einer Firmware) in dem ersten Feldgerät und dem zweiten Feldgerät derart aneinander angepasst oder vereinheitlicht, dass die Steuereinheit exakt dieselbe Highlevel-Funktion für das erste und das zweite Feldgerät verwenden kann, obwohl die Feldgeräte insbesondere mittels unterschiedlicher Feldbusse mit der Steuereinheit gekoppelt sind. Es bietet sich dadurch der Vorteil, dass ein in der Steuereinheit enthaltenes Ablaufprogramm nicht geändert werden muss, da das erste und das zweite Feldgerät insoweit vereinheitlicht sind, dass die Ausführung derselben Highlevel-Funktion ermöglicht wird. Die Vereinheitlichung kann auch für mehrere Highlevel-Funktionen erfolgen.

Bei herkömmlichen Feldgeräten, bei welchen für unterschiedliche Feldbusse üblicherweise keine Vereinheitlichung herrscht und dementsprechend auch nicht dieselbe Highlevel-Funktion für Feldgeräte an unterschiedlichen Feldbussen verwendet werden kann, müssen häufig umfangreiche Änderungen z.B. eines Quellcodes bei der Änderung der Maschine vorgenommen werden. Im Gegensatz dazu kann erfindungsgemäß eine deutliche Reduzierung des Aufwands bei der Durchführung von Änderungen erzielt werden.

Die Erfindung setzt dabei auf der Erkenntnis auf, dass eine Vereinheitlichung zumindest eines Teils der Funktionen von Feldgeräten verschiedener Familien (d.h. von Feldgeräten, welche z.B. auf unterschiedlichen Feldbussen basieren) zu einer deutlichen Zeiteinsparung z.B. beim Austausch von Feldgeräten führen kann. Die Vereinheitlichung kann dabei nicht nur die Feldgeräte selbst betreffen, sondern kann auch für die Steuereinheit und/oder Feldbus-Treiber durchgeführt werden, wie später ausgeführt. Allgemein gesprochen kann eine Vereinheitlichung auf allen Ebenen zwischen der Steuereinheit und dem Feldgerät für zumindest einen Teil der Highlevel-Funktionen erfolgen.

Bei der Änderung der Maschine kann es sich beispielsweise um das Anschließen des zweiten Feldgeräts an die Steuereinheit handeln. Ebenso ist es möglich, dass das erste Feldgerät durch das zweite Feldgerät ausgetauscht wird. Beim Austausch der Feldgeräte wird dann bevorzugt ein anderer Feldbus für das zweite Feldgerät verwendet, als dies zur Kommunikation zwischen der Steuereinheit und dem ersten Feldgerät der Fall war.

Der ausführbare Code, welcher in dem ersten und dem zweiten Feldgerät gespeichert ist und die Ausführung derselben Highlevel-Funktion ermöglicht, wird bevorzugt bei der Änderung der industriellen Maschine nicht verändert und bleibt damit gleich. Der ausführbare Code ist beispielsweise zum Teil Teil einer Firmware der Feldgeräte und liegt beispielsweise in dieser Form bereits bei der Auslieferung der Feldgeräte vor. Der ausführbare Code in dem ersten und zweiten Feldgerät kann sich hinsichtlich der Highlevel-Funktion unterscheiden, um so den Gegebenheiten durch z.B. den unterschiedlichen Feldbus Rechnung zu tragen.

Eine Highlevel-Funktion ist insbesondere eine Funktion, welche direkt in einem Quellcode verwendet werden kann, welcher zur Programmierung der Steuereinheit dient. Die Highlevel-Funktion kann direkt insbesondere in einer Hochsprache wie C, C++, C#, Java oder Python oder auch in einer für SPS üblichen Sprachen wie IEC-61131-3 genutzt werden. Eine Highlevel-Funktion, welche sowohl von dem ersten als auch von dem zweiten Feldgerät ausgeführt werden kann, wird hierin auch als vereinheitlichte Highlevel-Funktion bezeichnet.

Das erste und das zweite Feldgerät umfassen bevorzugt einen Funktionsumfang, der mit der Highlevel-Funktion oder mit mehreren solcher Highlevel-Funktionen angesteuert werden kann. Hierbei kann es sich z.B. bei einem Antrieb (Drive) um das Anfahren einer bestimmten Position, das Halten einer vorbestimmten Geschwindigkeit oder die Synchronisierung verschiedener Antriebe handeln. Bei einem Feldgerät, welches als Sensor ausgebildet ist, kann die Highlevel-Funktion insbesondere das Abfragen und Ausgeben von Sensorwerten betreffen. Die Highlevel-Funktion kann z.B. in der Steuereinheit oder auch in dem jeweiligen Feldgerät in mehrere Sub-Funktionen unterteilt werden, welche dann gemeinsam die Ausführung der Highlevel-Funktion bewirken. Die Sub-Funktionen beispielsweise für das Anfahren einer Position können das Setzen von geeigneten Parametern, das Aktivieren des Antriebs, das Deaktivieren des Antriebs und/oder das Ausgeben eines Erfolgssignals umfassen. Die Sub-Funktionen werden bevorzugt nicht direkt in dem Quellcode verwendet.

Im Funktionsumfang der Feldgeräte müssen nicht sämtliche Funktionen vereinheitlicht sein. Erfindungsgemäß reicht es aus, wenn zumindest eine oder eine vorbestimmte Anzahl von identischen Highlevel-Funktionen sowohl von dem ersten als auch von dem zweiten Feldgerät ausgeführt werden können. Selbstverständlich können auch weitere Feldgeräte, insbesondere für den Anschluss an weitere unterschiedliche Feldbusse, der Vereinheitlichung unterliegen und ebenfalls die Ausführung derselben Highlevel-Funktion ermöglichen.

Weitere vorteilhafte Ausführungsformen der Erfindung sind der Beschreibung, den Figuren sowie den Unteransprüchen zu entnehmen.

Gemäß einer ersten vorteilhaften Ausführungsform verwendet die Steuereinheit für die Ausführung der Highlevel-Funktion auf dem ersten und dem zweiten Feldgerät denselben Quellcode und/oder denselben ausführbaren Code. Dies bedeutet, dass beispielsweise für das Anfahren einer Position der Quellcode *"position* (x)" für das erste und das zweite Feldgerät verwendet werden kann. Üblicherweise vorhandene syntaktische Unterschiede (z.B. *"pos (x)"*) für die Ansteuerung der verschiedenen Feldgeräte müssen bei der Vereinheitlichung dementsprechend beseitigt worden sein. Hierdurch ergibt sich der Vorteil, dass ein Bediener der Maschine oder das Servicepersonal nicht den Quellcode und/oder den ausführbaren Code, welcher jeweils bevorzugt von der Steuereinheit abgearbeitet wird, anpassen müssen. Eine Anpassung von Parametern, z.B. der Netzwerkadresse des neu angeschlossenen (zweiten) Feldgeräts darf oder muss aber erfolgen. Der Quellcode und/oder der ausführbare Code hingegen bleiben gleich.

Unter derselben Highlevel-Funktion ist insbesondere zu verstehen, dass die Highlevel-Funktion im Quellcode und/oder im ausführbaren Code exakt gleich ist und beispielsweise denselben Namen besitzt und/oder dieselben Übergabewerte benötigt.

Unter einem Quellcode ist der in einer Programmiersprache geschriebene Text eines Computerprogramms zu verstehen, welcher für den Menschen lesbar ist. Ausführbarer Code hingegen umfasst insbesondere den compilierten Quellcode und umfasst bevorzugt Instruktionen in einer Maschinensprache, die von einem Prozessor der Steuereinheit und/oder der Feldgeräte ausgeführt werden können. Der ausführbare Code kann auch z.B. durch interpretierten Quellcode gebildet werden, wobei der Quellcode dann insbesondere zur Laufzeit in Maschinencode bzw. ausführbaren Code übersetzt wird. Der Quellcode kann auch in Form eines Funktionsblockdiagramms und dergleichen vorliegen, wobei bevorzugt eine gemäß IEC-61131-3 definierte Anweisungsliste (AWL), ein Kontaktplan (KOP), ein Funktionsplan (FUP), eine Ablaufsprache (AS) und/oder ein Strukturierter Text (ST) verwendet werden.

Gemäß einer weiteren vorteilhaften Ausführungsform sind in dem ersten Feldgerät und in dem zweiten Feldgerät zumindest die Parameter und/oder deren Verwendung identisch, die zur Ausführung der Highlevel-Funktion benötigt werden. Mit der Highlevel-Funktion können dementsprechend Parameter verknüpft sein, die in dem jeweiligen Feldgerät gespeichert werden und insbesondere von der Steuereinheit festgelegt werden. Im Zuge der Vereinheitlichung können also zumindest die Parameter für die (vereinheitlichte) Highlevel-Funktion in dem ersten und dem zweiten Feldgerät identisch sein. Dies bedeutet, die Parameter besitzen insbesondere identische Namen und bewirken ein identisches Verhalten des jeweiligen Feldgeräts. Es versteht sich, dass nicht sämtliche Parameter des Feldgeräts vereinheitlicht werden müssen, die Vereinheitlichung kann sich auf die für die Highlevel-Funktion notwendigen Parameter beschränken.

Gemäß einer weiteren vorteilhaften Ausführungsform umfasst die Änderung an der industriellen Maschine das Entfernen des ersten Feldgeräts und das Ersetzen des ersten Feldgeräts durch das zweite Feldgerät. Bevorzugt kommuniziert das erste Feldgerät vor dem Entfernen mittels eines ersten Feldbusses mit der Steuereinheit. Weiter bevorzugt kommuniziert das zweite Feldgerät nach dem Ersetzen mittels dem neuen oder anderen Feldbus (hierin auch zweiter Feldbus genannt) mit der Steuereinheit. Der erste und der zweite Feldbus sind verschieden.

Gemäß einer weiteren vorteilhaften Ausführungsform weisen die Steuereinheit einerseits und/oder das erste und zweite Feldgerät andererseits jeweils eine Schnittstelle zu einem Feldbus auf, wobei ein Feldbus-Treiber der Steuereinheit und/oder des ersten und zweiten Feldgeräts derart ausgebildet ist, dass die Ausführung derselben Highlevel-Funktion durch das erste und das zweite Feldgerät ermöglicht wird. Der Feldbus-Treiber kann insbesondere in einem Echtzeitsystem (Real-time System, RTS) ausgeführt werden und setzt bevorzugt Befehle der Steuereinheit in über den Feldbus übertragene Kommandos um. Die Umsetzung durch den Feldbus-Treiber erfolgt dabei derart passend, dass das erste und das zweite Feldgerät zumindest für die (vereinheitlichte) Highlevel-Funktion dieselbe Funktionalität ausführen.

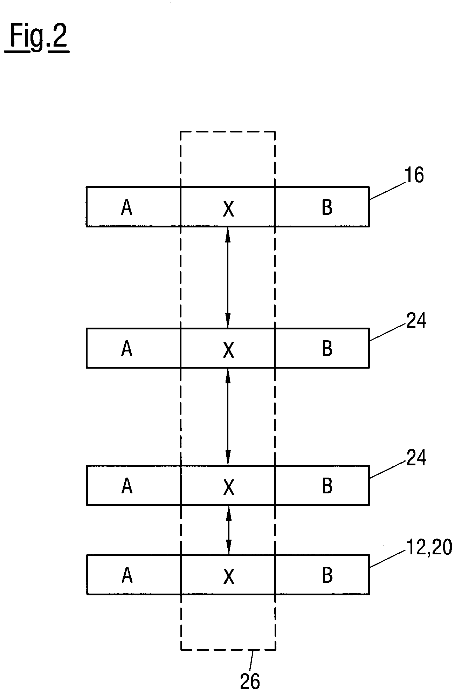

Die Vereinheitlichung kann also sowohl auf der Ebene der Steuereinheit, als auch auf der Ebene des Feldbusses und auch auf der Ebene der Feldgeräte erfolgen, sodass sich die Vereinheitlichung vertikal über sämtliche Ebenen der Architektur der industriellen Maschine erstreckt. Die Vereinheitlichung in einer jeweiligen Ebene muss dabei nicht für sämtliche möglichen Highlevel-Funktionen erfolgen, sondern kann nur für eine oder mehrere ausgewählte Highlevel-Funktionen durchgeführt werden, sodass sich - bildlich gesprochen - ein vertikales Teilstück ergibt, welches vereinheitlicht ist (siehe auch Fig. 2).

Gemäß einer weiteren vorteilhaften Ausführungsform umfasst die Steuereinheit das erste Feldgerät, d.h. die Steuereinheit kann als erstes Feldgerät fungieren. Dies ist beispielsweise dann möglich, wenn eine ursprünglich von der Steuereinheit ausgeführte Highlevel-Funktion nach der Änderung an der industriellen Maschine von einem von der Steuereinheit separaten zweiten Feldgerät ausgeführt wird. Beispielsweise kann die Steuereinheit ursprünglich direkt mit einem Temperatursensor gekoppelt sein. Bei der Änderung der Maschine wird der Temperatursensor dann aber an ein Feldgerät angeschlossen, wobei dieses Feldgerät dann als zweites Feldgerät angesehen wird. Damit kann die Highlevel-Funktion der Temperaturmessung dann von dem zweiten Feldgerät ausgeführt werden, welches insofern über einen neuen Feldbus mit der Steuereinheit gekoppelt ist. Alternativ kann die Steuereinheit auch das zweite Feldgerät umfassen oder als zweites Feldgerät fungieren. In diesem Fall kann eine Funktionalität von einem externen, d.h. ersten, Feldgerät auf die Steuereinheit übertragen werden.

Weiter alternativ ist es auch möglich, dass das erste und zweite Feldgerät jeweils separat voneinander und auch separat von der Steuereinheit ausgebildet sind, wobei die Kommunikation zwischen der Steuereinheit und dem ersten Feldgerät über einen ersten Feldbus und die Kommunikation zwischen der Steuereinheit und dem zweiten Feldgerät über einen zweiten Feldbus (d.h. einen anderen oder neuen Feldbus) erfolgt.

Gemäß einer weiteren vorteilhaften Ausführungsform umfasst der neue oder andere Feldbus ein neues oder anderes Feldbusprotokoll. Das Feldbusprotokoll kann sich bei der Umstellung von dem ersten Feldgerät auf das zweite Feldgerät beispielsweise von Sercos III auf EtherCat, CAN, Profibus DP, Profibus IO und dergleichen ändern (oder umgekehrt). Der ursprünglich verwendete Feldbus und auch der neue oder andere Feldbus sind insbesondere jeweils echtzeitfähig. Unter einer Änderung in dem Feldbus ist z.B. eine Änderung in zumindest einer Schicht des OSI-Schichtenmodells zu verstehen.

Gemäß einer weiteren vorteilhaften Ausführungsform wird mittels einer Programmierumgebung ausführbarer Code erzeugt und an die Steuereinheit übertragen, welcher die Highlevel-Funktion umfasst. In der Programmierumgebung kann ein Ablaufprogramm durch die Eingabe von Quellcode erstellt werden, z.B. in einer Hochsprache wie C, C++, C#, Java, Python oder IEC-61131-3, woraufhin die Programmierumgebung aus dem Quellcode den ausführbaren Code erzeugt, z.B. durch Compilieren. Der ausführbare Code wird dann an die Steuereinheit übertragen und bewirkt in der Steuereinheit das Ausführen des Ablaufprogramms. Während der Ausführung des Ablaufprogramms wird die Highlevel-Funktion verwendet.

Gemäß einer weiteren vorteilhaften Ausführungsform bleibt nach dem Koppeln des zweiten Feldgeräts in der Programmierumgebung der Quellcode zumindest betreffend die Highlevel-Funktion unverändert. Es ist also keine Änderung des Quellcodes notwendig, um weiterhin die Highlevel-Funktion mit dem zweiten Feldgerät auszuführen. Insbesondere wird der Quellcode nach dem Koppeln des zweiten Feldgeräts neu compiliert und der dabei entstehende ausführbare Code wird neu an die Steuereinheit übertragen. Bevorzugt muss gar keine Änderung des Quellcodes nach dem Koppeln des zweiten Feldgeräts erfolgen.

Wie bereits erwähnt, können allerdings Parameter in der Programmierumgebung verändert werden, wobei die Parameter insbesondere das zweite Feldgerät beschreiben, z.B. dessen Netzwerkadresse, dessen ID und/oder dessen Namen. Beispielsweise kann in der Programmierumgebung angegeben werden, dass das erste Feldgerät durch das zweite Feldgerät ersetzt wurde, woraufhin die Programmierumgebung dann die entsprechenden Parameter automatisch anpassen kann.

Beim Compilieren des Quellcodes, welcher bevorzugt ein IEC-61131-3 Quellcode ist, wird dieser in ausführbaren Code umgesetzt.

In der Programmierumgebung kann eine automatische Code-Vervollständigung vorhanden sein. Die Vervollständigung wird, insbesondere nur, für diejenigen (vereinheitlichten) Highlevel-Funktionen vorgenommen, welche von den an die Steuereinheit zu einem jeweiligen Zeitpunkt angeschlossenen Feldgeräten unterstützt werden und/oder auch tatsächlich aktiviert sind.

Gemäß einer weiteren vorteilhaften Ausführungsform werden Anforderungen zur Ausführung der Highlevel-Funktion in einem Manifest gespeichert oder beschrieben, beispielsweise mittels einer XML-basierten Beschreibung. In dem Manifest können beispielsweise der Name und/oder eine Beschreibung der jeweiligen Highlevel-Funktion(en) gespeichert werden. Zudem ist es möglich in dem Manifest eine entsprechende Schnittstelle gemäß IEC61131-3 zu speichern, welche Parameternamen, zugehörige Datentypen und dergleichen jeweils für die Steuereinheit, den Feldbus-Treiber und/oder das Feldgerät umfasst.

Das Manifest und/oder der ausführbare Code können als Library zur Verfügung gestellt werden. Der ausführbare Code kann dabei für die Steuereinheit, den Feldbus-Treiber und/oder das Feldgerät sein. Der ausführbare Code kann dann beispielsweise in die Steuereinheit und/oder die Feldgeräte geladen werden.

Das Manifest und/oder die Vereinheitlichung können schon vor der Inbetriebnahme oder dem Aufbau der industriellen Maschine vorliegen bzw. durchgeführt worden sein, d.h. implementiert worden sein. Danach kann die Vereinheitlichung in der Maschine verwendet werden. Die vereinheitlichte Highlevel-Funktion kann insbesondere vielfach wiederverwendet werden, beispielsweise in verschiedenen Feldgeräten und/oder verschiedenen industriellen Maschinen.

Zusammengefasst kann also z.B. mit den Informationen aus dem Manifest eine Gruppe von vereinheitlichten Feldgeräten geschaffen werden, welche insbesondere für verschiedene Feldbusse konzipiert sind. Die z.B. in dem Manifest vorgeschriebene Vereinheitlichung wird dabei bevorzugt für die Steuereinheit, die Feldbus-Treiber und/oder die Feldgeräte für zumindest eine Highlevel-Funktion vorgenommen. Hierdurch ist es dann beispielsweise möglich, die industrielle Maschine im Zuge eines Upgrades so zu verändern, dass die Maschine eine bessere Genauigkeit, einen höheren Produktionstakt o. ä. aufweist. Hierzu kann das erste Feldgerät durch ein zweites Feldgerät ersetzt werden, welches die erhöhte Genauigkeit, insbesondere bei derselben Highlevel-Funktion, bereitstellt. Eine Anpassung des Quellcodes der Highlevel-Funktion ist dann nicht notwendig. In ähnlicher Weise kann ein erstes Feldgerät durch ein zweites Feldgerät ausgetauscht werden, welches z.B. kostengünstiger oder langlebiger ist, um so die Betriebskosten der industriellen Maschine zu drücken.

Gemäß einer weiteren vorteilhaften Ausführungsform wird das zweite Feldgerät automatisch erkannt. Insbesondere werden basierend auf der automatischen Erkennung die erforderlichen Parameter in der Steuereinheit automatisch gesetzt. Zudem kann überprüft werden, welche vereinheitlichten Highlevel-Funktionen das zweite Feldgerät unterstützt. Die automatische Erkennung kann insbesondere während einer Boot-Phase oder während einer Initialisierungs-Phase der Steuereinheit erfolgen. In diesem Fall muss also nur noch der Austausch des Feldgeräts erfolgen, die weiteren notwendigen Anpassungen werden dann automatisch erledigt und der Betrieb der Maschine kann fortgesetzt werden.

Durch die hierin beschriebene Vereinheitlichung wird es ermöglicht, eine Vielzahl unterschiedlicher Feldgeräte und Feldbusse untereinander auszutauschen, wobei lediglich ein minimaler manueller Aufwand notwendig ist.

Weiterer Gegenstand der Erfindung ist ein Set von zumindest zwei Feldgeräten, wobei ein Teil der Feldgeräte für die Kopplung mit einem ersten Feldbus und ein anderer Teil der Feldgeräte für die Kopplung mit einem zweiten, vom ersten Feldbus verschiedenen, Feldbus ausgebildet ist, wobei alle Feldgeräte ausführbaren Code umfassen, welcher die Ausführung derselben Highlevel-Funktion ermöglicht.

Gemäß einer Ausführungsform umfasst das Set zusätzlich eine Steuereinheit, welche ausgebildet ist, basierend auf demselben Quellcode die Highlevel-Funktion in den zumindest zwei Feldgeräten über den ersten Feldbus und den zweiten Feldbus anzusteuern.

Nachfolgend wird die Erfindung rein beispielhaft unter Bezugnahme auf die Zeichnungen beschrieben. Es zeigen:
**Fig.** 1 eine industrielle Maschine, bei welcher ein erstes Feldgerät durch ein zweites Feldgerät ersetzt wird;
**Fig.** 2 eine vereinheitlichte Highlevel-Funktion bei einem Feldgerät;
**Fig.** 3 eine vereinheitlichte Highlevel-Funktion bei zwei verschiedenen Feldgeräten;
**Fig.** 4 Parameter von vereinheitlichten Highlevel-Funktionen in verschiedenen Feldgeräten.

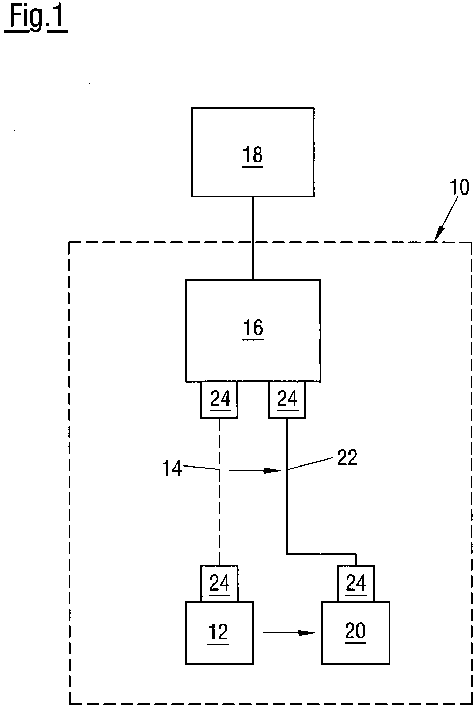

Fig. 1 zeigt eine industrielle Maschine 10, welche der Bearbeitung von (nicht gezeigten) Werkstücken dient. Die Werkstücke werden mittels eines (nicht gezeigten) Antriebs bewegt, wobei der Antrieb in der ursprünglichen Form der industriellen Maschine 10 von einem ersten Feldgerät 12 direkt gesteuert wird. Das erste Feldgerät 12 ist mittels eines ersten Feldbusses 14 (z.B. Sercos III) mit einer Steuereinheit in Form einer SPS 16 gekoppelt.

Die SPS 16 arbeitet ein Ablaufprogramm ab, in welchem eine vereinheitlichte Highlevel-Funktion verwendet wird, die das erste Feldgerät 12 anweist, jeweils eine bestimmte Position mit dem Antrieb anzufahren. Das Ablaufprogramm wurde als Quellcode in einer Programmierumgebung 18 erstellt und in compilierter Form als ausführbarer Code an die SPS 16 übertragen.

Nun soll ein Austausch des ersten Feldgeräts 12 durch ein zweites Feldgerät 20 erfolgen, was durch die Pfeile in Fig. 1 angedeutet ist. Das erste Feldgerät 12 wird dazu aus der industriellen Maschine 10 entfernt und dementsprechend von dem ersten Feldbus 14 getrennt. Das zweite Feldgerät 20 wird nun mittels eines zweiten Feldbusses 22 (z.B. CAN) mit der SPS 16 gekoppelt. Sowohl die SPS 16 als auch die Feldgeräte 12, 20 umfassen jeweils einen Feldbus-Treiber 24, welcher von einer entsprechenden Hardware der SPS 16 und der Feldgeräte 12, 20 ausgeführt wird. Die SPS 16 umfasst Hardware für beide Feldbusse 14, 22.

Sowohl in der SPS 16, als auch in dem jeweiligen Feldbus-Treiber 24 und auch in den Feldgeräten 12, 20 ist jeweils entsprechender ausführbarer Code enthalten, der es gestattet, die exakt gleiche Highlevel-Funktion sowohl mittels des ersten Feldgeräts 12 als auch mittels des zweiten Feldgeräts 20 auszuführen. Eine Anpassung des Quellcodes ist daher beim Austausch der Feldgeräte 12, 20 nicht notwendig. In der Programmierumgebung 18 wird lediglich das neue, d.h. das zweite, Feldgerät 20 als Ersatz des ersten Feldgeräts 12 angegeben (entspricht einer Konfigurationsänderung), woraufhin in der SPS 16 beispielsweise eine neue Netzwerkadresse des zweiten Feldgeräts 20 gespeichert wird.

Der Betrieb der industriellen Maschine 10 kann dann nahezu ohne Unterbrechung weitergeführt werden, da eine Anpassung des Ablaufprogramms (z.B. des Quellcodes) nicht erforderlich ist.

Die auf verschiedenen Ebenen durchgeführte Vereinheitlichung einer Highlevel-Funktion ist in Fig. 2 genauer dargestellt. Die verschiedenen Ebenen sind: die SPS 16, die Feldbus-Treiber 24 und das erste Feldgerät 12. Eine vereinheitlichte Highlevel-Funktion X ist in Fig. 2 durch einen vertikalen Balken 26 angedeutet. Für die innerhalb des Balkens 26 dargestellte Highlevel-Funktion X sind also Vorkehrungen zur Vereinheitlichung getroffen worden. Für die weiteren gezeigten Highlevel-Funktionen A, B besteht keine Vereinheitlichung, sodass beim Zugreifen auf diese Funktionen nach dem Austausch der Feldgeräte 12, 20 eine Veränderung des Quellcodes und damit auch des ausführbaren Codes zumindest der SPS 16 erfolgen müsste.

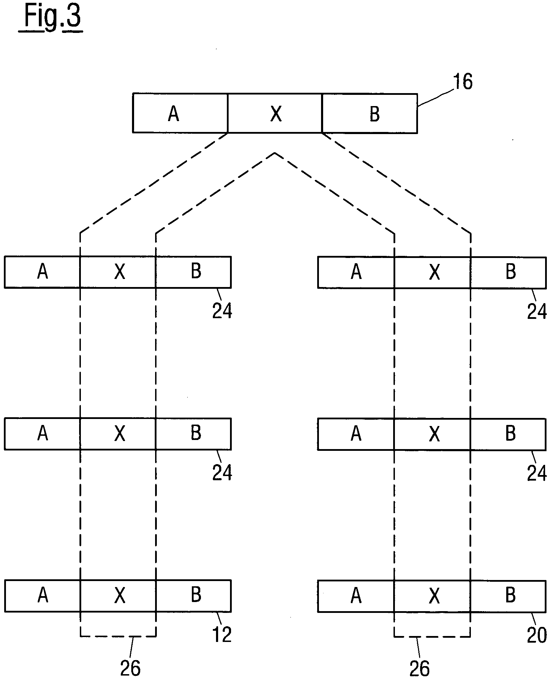

Werden nun zwei verschiedene Feldgeräte 12, 20 nacheinander mit der SPS 16 gekoppelt, so kann die Vereinheitlichung für die SPS 16 für beide Feldgeräte 12, 20 verwendet werden, wie dies in Fig. 3 gezeigt ist. Der vereinheitlichte Teil der SPS 16 setzt dabei auf vereinheitlichte Teile in den Feldbus-Treibern 24 und in den Feldgeräten 12, 20 auf (jeweils angedeutet durch den Balken 26). In den unterschiedlichen Feldbus-Treibern 24 und den unterschiedlichen Feldgeräten 12, 20 kann die Vereinheitlichung auf unterschiedliche Art und Weise erzielt werden. Es ist dabei lediglich relevant, dass an dem Quellcode oder dem ausführbaren Code für die SPS 16 keine Änderungen hinsichtlich der Highlevel-Funktion X vorzunehmen sind, um weiterhin das gleiche Verhalten der industriellen Maschine 10 zu erhalten.

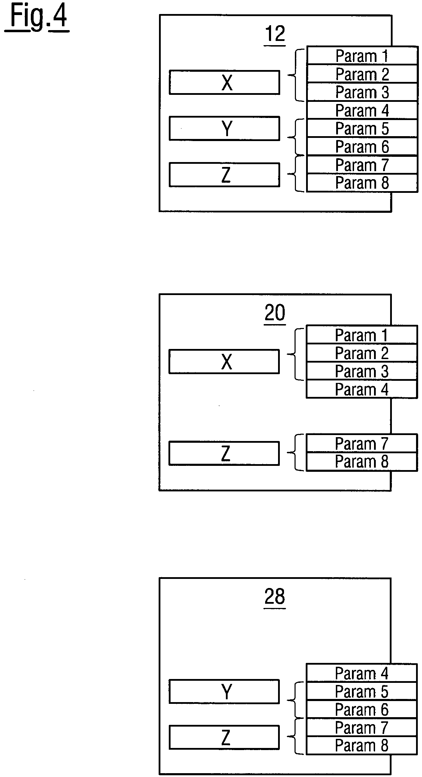

Fig. 4 zeigt das erste Feldgerät 12, das zweite Feldgerät 20 und ein drittes Feldgerät 28. Die Feldgeräte 12, 20, 28 unterstützen insgesamt drei vereinheitlichte Highlevel-Funktionen X, Y, Z. Zu jeder Highlevel-Funktion X, Y, Z gehören verschiedene Parameter, z.B. eine Maximalgeschwindigkeit eines Antriebs. Wie aus Fig. 4 zu erkennen ist, sind die Parameter für die jeweilige Highlevel-Funktion X, Y, Z identisch, sodass hierdurch eine Vereinheitlichung erreicht wird. Zudem ist aus Fig. 4 ersichtlich, dass beispielsweise das erste Feldgerät 12 und das zweite Feldgerät 20 bezüglich der Highlevel-Funktionen X, Z vereinheitlicht und damit austauschbar sind. Das dritte Feldgerät 28 und das erste Feldgerät 12 sind nur hinsichtlich der Highlevel-Funktionen Y und Z vereinheitlicht und austauschbar.

Werden in der industriellen Maschine von dem ersten Feldgerät 12 beispielsweise die Highlevel-Funktionen X und Z verwendet, so kann das erste Feldgerät 12 durch das zweite Feldgerät 20 ohne eine Anpassung des Quellcodes ausgetauscht werden. Der Aufwand beim Austausch der Feldgeräte 12, 20 wird dadurch erheblich reduziert und mögliche Fehler beim Austausch weitgehend vermieden.

### Bezugszeichenliste

- 10: industrielle Maschine
- 12: erstes Feldgerät
- 14: erster Feldbus
- 16: SPS
- 18: Programmierumgebung
- 20: zweites Feldgerät
- 22: zweiter Feldbus
- 24: Feldbus-Treiber
- 26: Vereinheitlichung
- 28: drittes Feldgerät

- A, B: nicht-vereinheitlichte Highlevel-Funktionen
- X - Z: vereinheitlichte Highlevel-Funktionen

## Patentansprüche

1. Verfahren zum Durchführen von Änderungen an einer industriellen Maschine (10), wobei die Maschine (10) zumindest eine Steuereinheit (SPS) (16) aufweist, welche mit einem oder mehreren Feldgeräten gekoppelt ist oder koppelbar ist, wobei die Steuereinheit (16) die Ausführung einer Highlevel-Funktion (X, Y, Z) durch ein erstes Feldgerät (12) veranlasst,
**dadurch gekennzeichnet dass**,
bei oder nach der Änderung der Maschine die Highlevel-Funktion (X, Y, Z) von einem zweiten Feldgerät (20) ausgeführt wird, wobei das zweite Feldgerät (20) ein neues oder anderes Feldgerät (20) ist als das erste Feldgerät (12), wobei das zweite Feldgerät (20) mittels eines neuen oder anderen Feldbusses (22) mit der Steuereinheit (16) gekoppelt wird, wobei das zweite Feldgerät (20) ausgebildet ist, dieselbe Highlevel-Funktion (X, Y, Z) auszuführen, wie das erste Feldgerät (12), indem das erste Feldgerät (12) und das zweite Feldgerät (20) ausführbaren Code umfassen, welcher die Ausführung derselben Highlevel-Funktion (X, Y, Z) durch das erste Feldgerät (12) und das zweite Feldgerät (20) ermöglicht.

2. Verfahren nach Anspruch 1,
wobei die Steuereinheit (16) für die Ausführung der Highlevel-Funktion (X, Y, Z) auf dem ersten und dem zweiten Feldgerät (12, 20) denselben Quellcode und/oder denselben ausführbaren Code verwendet.

3. Verfahren nach Anspruch 1 oder 2,
wobei in dem ersten Feldgerät (12) und dem zweiten Feldgerät (20) zumindest die Parameter identisch sind, die zur Ausführung der Highlevel-Funktion (X, Y, Z) benötigt werden.

4. Verfahren nach einem der vorstehenden Ansprüche,
wobei die Änderung an der industriellen Maschine (10) das Entfernen des ersten Feldgeräts (12) und das Ersetzen des ersten Feldgeräts (12) durch das zweite Feldgerät (20) umfasst.

5. Verfahren nach einem der vorstehenden Ansprüche,
wobei das erste Feldgerät (12) vor dem Entfernen mittels eines ersten Feldbusses (14) mit der Steuereinheit (16) kommuniziert und das zweite Feldgerät (20) nach dem Ersetzen mit dem neuen oder anderen Feldbus (22) mit der Steuereinheit kommuniziert.

6. Verfahren nach einem der vorstehenden Ansprüche,
wobei die Steuereinheit (16) und/oder das erste und zweite Feldgerät (12, 20) jeweils eine Schnittstelle zu einem Feldbus (14, 22) aufweisen, wobei ein Feldbus-Treiber (24) der Steuereinheit (16) und/oder des ersten und zweiten Feldgeräts (12, 20) derart ausgebildet ist, dass die Ausführung derselben Highlevel-Funktion (X, Y, Z) durch das erste Feldgerät (12) und das zweite Feldgerät (20) ermöglicht wird.

7. Verfahren nach einem der vorstehenden Ansprüche,
wobei die Steuereinheit (16) das erste Feldgerät (12) umfasst.

8. Verfahren nach einem der vorstehenden Ansprüche,
wobei der neue oder andere Feldbus (22) ein neues oder anderes Feldbusprotokoll umfasst.

9. Verfahren nach einem der vorstehenden Ansprüche,
wobei mittels einer Programmierumgebung (18) ausführbarer Code erzeugt und an die Steuereinheit (16) übertragen wird, welcher die Highlevel-Funktion (X, Y, Z) umfasst.

10. Verfahren nach Anspruch 9,
wobei nach dem Koppeln des zweiten Feldgeräts (20) in der Programmierumgebung (18) der Quellcode zumindest betreffend die Highlevel-Funktion (X, Y, Z) unverändert bleibt und der Quellcode insbesondere neu compiliert und neu an die Steuereinheit (16) übertragen wird.

11. Verfahren nach einem der vorstehenden Ansprüche,
wobei Anforderungen zur Ausführung der Highlevel-Funktion (X, Y, Z) in einem Manifest beschrieben werden, beispielsweise mittels einer XML-basierten Beschreibung.

12. Verfahren nach einem der vorstehenden Ansprüche,
wobei das zweite Feldgerät (20) automatisch erkannt wird und basierend auf der automatischen Erkennung die erforderlichen Parameter in der Steuereinheit (16) automatisch gesetzt werden.

13. Set von zumindest zwei Feldgeräten (12, 20, 28), wobei ein Teil der Feldgeräte (12, 20, 28) für die Kopplung mit einem ersten Feldbus (14) und ein anderer Teil der Feldgeräte für die Kopplung mit einem zweiten, vom ersten Feldbus verschiedenen, Feldbus (22) ausgebildet ist, wobei alle Feldgeräte (12, 20, 28) ausführbaren Code umfassen, welcher die Ausführung derselben Highlevel-Funktion (X, Y, Z) ermöglicht.

14. Set von zumindest zwei Feldgeräten (12, 20, 28) nach Anspruch 13, wobei das Set zusätzlich eine Steuereinheit (16) umfasst, welche ausgebildet ist, basierend auf demselben Quellcode die Highlevel-Funktion (X, Y, Z) in den zumindest zwei Feldgeräten über den ersten Feldbus (14) und den zweiten Feldbus (22) anzusteuern.

## Geänderte Patentansprüche

### Geänderte Patentansprüche gemäss Regel 137(2) EPÜ.

1. Verfahren zum Durchführen von Änderungen an einer industriellen Maschine (10), wobei die Maschine (10) zumindest eine Steuereinheit (SPS) (16) aufweist, welche mit einem oder mehreren Feldgeräten gekoppelt ist oder koppelbar ist, wobei die Steuereinheit (16) die Ausführung einer Highlevel-Funktion (X, Y, Z) durch ein erstes Feldgerät (12) veranlasst, wobei die Kommunikation zwischen der Steuereinheit (16) und dem ersten Feldgerät (12) über einen ersten Feldbus (14) erfolgt,
**dadurch gekennzeichnet dass**,
bei oder nach der Änderung der Maschine die Highlevel-Funktion (X, Y, Z) von einem zweiten Feldgerät (20) ausgeführt wird, wobei das zweite Feldgerät (20) ein typmäßig anderes Feldgerät (20) ist als das erste Feldgerät (12), wobei das zweite Feldgerät (20) mittels eines neuen oder anderen zweiten Feldbusses (22) mit der Steuereinheit (16) gekoppelt wird, wobei das zweite Feldgerät (20) ausgebildet ist, dieselbe Highlevel-Funktion (X, Y, Z) auszuführen, wie das erste Feldgerät (12), indem das erste Feldgerät (12) und das zweite Feldgerät (20) ausführbaren Code umfassen, welcher die Ausführung derselben Highlevel-Funktion (X, Y, Z) durch das erste Feldgerät (12) und das zweite Feldgerät (20) ermöglicht.

2. Verfahren nach Anspruch 1,
wobei die Steuereinheit (16) für die Ausführung der Highlevel-Funktion (X, Y, Z) auf dem ersten und dem zweiten Feldgerät (12, 20) denselben Quellcode und/oder denselben ausführbaren Code verwendet.

3. Verfahren nach Anspruch 1 oder 2,
wobei in dem ersten Feldgerät (12) und dem zweiten Feldgerät (20) zumindest die Parameter identisch sind, die zur Ausführung der Highlevel-Funktion (X, Y, Z) benötigt werden.

4. Verfahren nach einem der vorstehenden Ansprüche,
wobei die Änderung an der industriellen Maschine (10) das Entfernen des ersten Feldgeräts (12) und das Ersetzen des ersten Feldgeräts (12) durch das zweite Feldgerät (20) umfasst.

5. Verfahren nach einem der vorstehenden Ansprüche,
wobei das erste Feldgerät (12) vor dem Entfernen mittels eines ersten Feldbusses (14) mit der Steuereinheit (16) kommuniziert und das zweite Feldgerät (20) nach dem Ersetzen mit dem neuen oder anderen Feldbus (22) mit der Steuereinheit kommuniziert.

6. Verfahren nach einem der vorstehenden Ansprüche,
wobei die Steuereinheit (16) und/oder das erste und zweite Feldgerät (12, 20) jeweils eine Schnittstelle zu einem Feldbus (14, 22) aufweisen, wobei ein Feldbus-Treiber (24) der Steuereinheit (16) und/oder des ersten und zweiten Feldgeräts (12, 20) derart ausgebildet ist, dass die Ausführung derselben Highlevel-Funktion (X, Y, Z) durch das erste Feldgerät (12) und das zweite Feldgerät (20) ermöglicht wird.

7. Verfahren nach einem der vorstehenden Ansprüche,
wobei die Steuereinheit (16) das erste Feldgerät (12) umfasst.

8. Verfahren nach einem der vorstehenden Ansprüche,
wobei der neue oder andere Feldbus (22) ein neues oder anderes Feldbusprotokoll umfasst.

9. Verfahren nach einem der vorstehenden Ansprüche,
wobei mittels einer Programmierumgebung (18) ausführbarer Code erzeugt und an die Steuereinheit (16) übertragen wird, welcher die Highlevel-Funktion (X, Y, Z) umfasst.

10. Verfahren nach Anspruch 9,
wobei nach dem Koppeln des zweiten Feldgeräts (20) in der Programmierumgebung (18) der Quellcode zumindest betreffend die Highlevel-Funktion (X, Y, Z) unverändert bleibt und der Quellcode insbesondere neu compiliert und neu an die Steuereinheit (16) übertragen wird.

11. Verfahren nach einem der vorstehenden Ansprüche,
wobei Anforderungen zur Ausführung der Highlevel-Funktion (X, Y, Z) in einem Manifest beschrieben werden, beispielsweise mittels einer XMLbasierten Beschreibung.

12. Verfahren nach einem der vorstehenden Ansprüche,
wobei das zweite Feldgerät (20) automatisch erkannt wird und basierend auf der automatischen Erkennung die erforderlichen Parameter in der Steuereinheit (16) automatisch gesetzt werden.

13. Set von zumindest zwei typmäßig verschiedenen Feldgeräten (12, 20, 28),
wobei ein Teil der Feldgeräte (12, 20, 28) für die Kopplung mit einem ersten Feldbus (14) und ein anderer Teil der Feldgeräte für die Kopplung mit einem zweiten, vom ersten Feldbus verschiedenen, Feldbus (22) ausgebildet ist, wobei alle Feldgeräte (12, 20, 28) ausführbaren Code umfassen, welcher die Ausführung derselben Highlevel-Funktion (X, Y, Z) ermöglicht.

14. Set von zumindest zwei Feldgeräten (12, 20, 28) nach Anspruch 13, wobei das Set zusätzlich eine Steuereinheit (16) umfasst, welche ausgebildet ist, basierend auf demselben Quellcode die Highlevel-Funktion (X, Y, Z) in den zumindest zwei Feldgeräten über den ersten Feldbus (14) und den zweiten Feldbus (22) anzusteuern.
